# DEMANDE DE BREVET EUROPEEN

(11) **EP 2 071 505 A1**
(43) Date de publication de la demande: **17.06.2009**
(21) Numéro de dépôt: 08170592.3
(22) Date de dépôt: 03.12.2008
(51) Int. Cl.: G06Q 30/00

(54) **Gestionnaire de communautés**

(30) Priorité: 06.12.2007 FR 0759597
(71) Demandeur: Alcatel Lucent, 75008 Paris (FR)
(72) Inventeur: Senot, Christophe, 91620, NOZAY (FR); Toms, Yann, 91620, NOZAY (FR); Aghasaryan, Armen, 91620, NOZAY (FR); Betge-Brezetz, Stéphane, 91620, NOZAY (FR)
(74) Mandataire: Hedarchet, Stéphane

(57) **Abrégé**

Gestionnaire de communautés (1) capable de détecter, de modéliser et de surveiller l'évolution de communautés, comprenant une base de données (3) de communautés et un module constructeur (2) de profils de communautés, construisant des profils de communautés à partir de données explicites (9) telles que
- déclarations explicites des utilisateurs, et implicites (10, 11) telles que
- traces d'utilisation des services de communautés,
- traces d'échanges entre utilisateurs des communautés,
- profils utilisateurs,
afin de peupler ladite base de données (3) de communautés.

## Description

La présente invention concerne un gestionnaire de communautés apte à détecter, modéliser et surveiller l'évolution de communautés.

Une communauté est un groupe de personnes partageant un ou plusieurs intérêts communs. Par exemple les membres d'un club de foot, ou des utilisateurs qui aiment les films d'action. Les personnes constituant une communauté ne se connaissent pas forcement et n'ont pas obligatoirement de relations directes entre elles . Il est proposé aujourd'hui, sur des réseaux informatiques (Web) ou téléphoniques des portails ou sites spécifiques de support aux activités de ces communautés. Ainsi un portail peut proposer un ensemble de services collaboratifs et participatifs offerts à des utilisateurs membres de communautés qui peuvent se retrouver et échanger des informations au travers de tels portails.

Actuellement, les solutions existantes sur le Web proposent une détection de communautés basée uniquement sur les informations explicites fournies par les utilisateurs. Ainsi un utilisateur remplit un formulaire d'inscription ou une fiche d'abonnement à une communauté, un groupe, un service, un forum, un club selon ses centres d'intérêt et déclare de nombreuses informations personnelles.

Bien que précises et pertinentes au moment où l'utilisateur les fournit, de telles informations explicites sont rarement mises à jour et deviennent rapidement obsolètes et ne reflètent plus la réalité du statut actuel de l'utilisateur.

Les solutions actuelles, n'utilisant que ces informations explicites se condamnent rapidement à perdre de leur pertinence en fonctionnant sur des données de plus en plus erronées.

La présente invention remédie à ces différents inconvénients afin de combler une lacune en complétant les informations explicites initiales par une exploitation extensive d'information rassemblées implicitement afin de réactualise en permanence une base de données d'information sur les communautés, et leurs membres utilisateurs.

L'invention a pour objet un gestionnaire de communautés capable de détecter, de modéliser et de surveiller l'évolution de communautés, comprenant une base de données de communautés et un module constructeur de profils de communautés, construisant des profils de communautés à partir de données explicites telles que déclarations explicites des utilisateurs, et implicites telles que traces d'utilisation des services de communautés, traces d'échanges entre utilisateurs des communautés, profils utilisateurs, afin de peupler ladite base de données de communautés.

Selon une autre caractéristique de l'invention le gestionnaire de communautés comprend encore un analyseur topographique qui analyse la base de données de communautés pour en extraire des relations topographiques entre les communautés, telles que distances, intersections, tailles, relations hiérarchiques, etc., afin de construire une topographie de l'univers des communautés couvertes par le gestionnaire de communautés.

Selon une autre caractéristique de l'invention le gestionnaire de communautés comprend encore un détecteur de rôle détectant et identifiant pour chaque communauté, à partir des données explicites et implicites, des rôles d'utilisateurs tel que meneur, définisseur de tendance, suiveur, relais intercommunautaire, etc.

Selon une autre caractéristique de l'invention le gestionnaire de communautés comprend encore un analyseur de tendances qui analyse la base de données de communautés et son historique, pour en extraire des tendances d'évolution, pour les communautés couvertes par le gestionnaire de communautés.

Selon une autre caractéristique de l'invention le gestionnaire de communautés, comprend encore une interface d'interrogation permettant d'extraire de la base de données de communautés une information telle qu'un profil de communauté, une relation topographique, un rôle ou une tendance.

L'invention concerne encore un procédé de gestion de communautés capable de détecter, de modéliser et de surveiller l'évolution de communautés, comprenant les étapes suivantes :
- construction de profils de communautés à partir de données explicites telles que :
   - déclarations explicites des utilisateurs, et implicites telles que
   - traces d'utilisation des services de communautés,
   - traces d'échanges entre utilisateurs des communautés,
   - profils utilisateurs,
- peuplement d'une base de données de communautés.

L'invention concerne encore un programme d'ordinateur implémentant ledit procédé de gestion de communautés.

Un avantage du dispositif ou du procédé selon l'invention est de permettre de maintenir à jour les informations concernant les communautés et leurs membres utilisateurs en utilisant des informations implicitement recueillies.

Un autre avantage du dispositif ou du procédé gérant une base de données et en extrayant des informations pertinentes est de permettre d'améliorer les services offerts par lesdites communautés à leurs adhérents utilisateurs.

Un autre avantage du dispositif ou du procédé gérant une base de données et en extrayant des informations pertinentes est de permettre d'offrir aux annonceurs des informations de ciblage marketing très pointues.

D'autres caractéristiques, détails et avantages de l'invention ressortiront plus clairement de la description détaillée donnée ci-après à titre indicatif en relation avec des dessins sur lesquels :
- la figure 1 présente un schéma bloc d'une organisation illustrative d'un gestionnaire de communautés conforme à l'invention,
- la figure 2 présente des exemples de sources de données et les types de données qu'elles permettent d'obtenir.

Aujourd'hui, les utilisateurs sont de plus en plus reliés au sein de réseaux informatiques (Web) ou téléphoniques et apprécient et utilisent de plus en plus extensivement des services de communautés. Ainsi sur le Web on peut citer des sites communautaires tels que MySpace, LinkedIn, Flickr, etc. Ces communautés et les services associés représentent une tendance majeure encore appelée services de réseaux sociaux basés sur des services collaboratifs et participatifs.

Les utilisateurs de tels services communautaires apprécient de créer leurs propres communautés et de bénéficier de services les plus personnalisés possibles, prenant en compte les structures et les comportements desdites communautés, ainsi que leurs évolutions.

De plus les annonceurs cherchent toujours des moyens de ciblages plus efficaces à partir d'informations pertinentes extraites de l'observation des communautés.

Il est ainsi recherché un système qui exploite le potentiel informatif des communautés en observant systématiquement et éventuellement en temps réel, leurs activités pour en extraire des mesures, des données, des informations pertinentes, tant pour leurs utilisateurs, que pour des intervenants ou observateurs extérieurs.

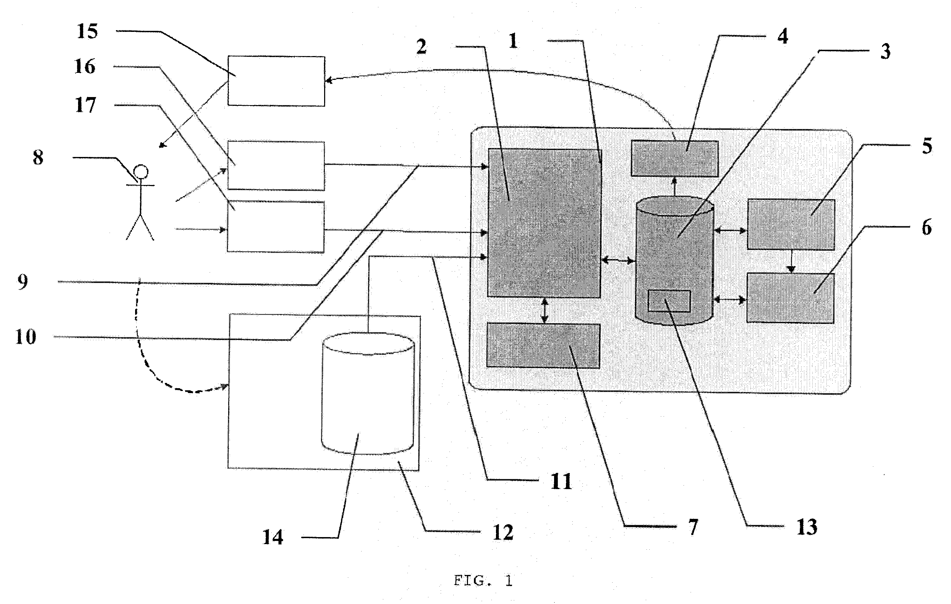

Selon la figure 1, un gestionnaire de communautés 1 est représenté dans un environnement illustratif de l'invention. Ledit gestionnaire 1 est un programme informatique. Ce dernier peut être implanté de différentes manières connues de l'homme du métier. Il peut être implanté en un seul bloc ou encore être réalisé en plusieurs modules communicants répartis sur différents ordinateurs du réseau accueillant les communautés et les services associés.

Le gestionnaire de communautés 1 est capable de détecter, de modéliser et de surveiller l'évolution de communautés. Pour cela il comprend une base de données 3 de communautés contenant toutes les informations nécessaires au fonctionnement dudit gestionnaire 1 ainsi que les informations produites par ledit gestionnaire 1. Le gestionnaire 1 comprend encore un module constructeur 2 de profils de communautés, construisant des profils de communautés à partir de données qu'il reçoit en entrée. Ces données se composent de données explicites 9. Les données explicites sont typiquement issues des déclarations explicites des utilisateurs 8. Ainsi, par exemple, lors de son inscription / affiliation / adhésion à une communauté /groupe / forum / mailing-list, un utilisateur / adhérent /membre 8, se connecte au portail 16 de la communauté et remplit explicitement une fiche de renseignements contenant des renseignements personnels, mais aussi des informations concernant ses centres d'intérêts, ses souhaits, etc. Les données explicites 9 comprennent encore d'autres sources telles que des déclarations d'intérêts ou encore des réponses à des sondages, des jeux, etc. De telles données sont généralement riches, denses et fiables puisque volontairement délivrées, mais souffrent de ne pas être réactualisées.

Pour cela, une caractéristique importante de l'invention est d'utiliser, en sus, des sources de données implicites. Ces données implicites proviennent de sources multiples. Il peut s'agir des traces d'utilisation des services de communautés 16. Ces traces sont recueillies auprès des sites 16 gérant les communautés et comprennent toutes les traces d'activité d'un utilisateur 8 en rapport avec la ou les communautés : ses actions, ses intérêts, ses communications avec les autres membres, leur fréquences, les éléments publiés par l'utilisateur 8 lui-même tel que ses billets, ses blogs, etc.

Un autre exemple de source de données implicites est constitué par les traces d'échanges 10 entre utilisateurs des communautés. Ainsi les e-mails, les chats ou tout autres messages échangés entre des utilisateurs 8 identifiés comme membres de communautés peuvent avec profit être observés pour en déduire certains mots clés concernant des centres d'intérêts identifiés ou encore pour détecter quel utilisateur est en contact avec quel autre, et par exemple la fréquence de leurs contacts. Ceci peut être utile pour la détermination de rôles, comme il sera expliqué plus loin.

De manière plus générale, les traces sont des informations collectées sur les différents portails communautaires 16. Mais elles peuvent également provenir de services plus classiques 17 comme un serveur de vidéo à la demande, de communication voix, de SMS... Ce sont généralement des journaux sous la forme d'enregistrements de données d'appel ou CDR (de l'anglais Call Data Record) ou de cookies par exemple. Elles contiennent des informations relatives aux consommations et aux interactions faites par l'utilisateur 8 au travers des différents services 17.

Par exemple pour les SMS les informations suivantes peuvent être exploitées :
- numéro de l'envoyeur
- numéro du destinataire
- date
- taille du message
- thématique du message.

Un autre exemple de source de données implicites est par exemple des profils utilisateurs. Ainsi de même que l'invention extrait des profils de communautés, des outils de construction 12 de profils utilisateur, extérieur à l'invention, existent qui analysent et extraient de données utilisateurs des profils utilisateurs 11 stockés dans une base de données 14. Un profil utilisateur 11 peut contenir en plus de données personnelles relatives à un utilisateur 8 (nom, age, adresse, etc.) des données d'intérêts (centre d'intérêts, sites fréquentés, communautés dont il est adhérent, derniers achats effectués ...), un tel profil utilisateur 11 est alimenté par des données explicites fournies par l'utilisateur 8 ou par des données implicites déduites de son activité et provenant de son fournisseur d'accès, ou encore des sites visités (cookies,...).

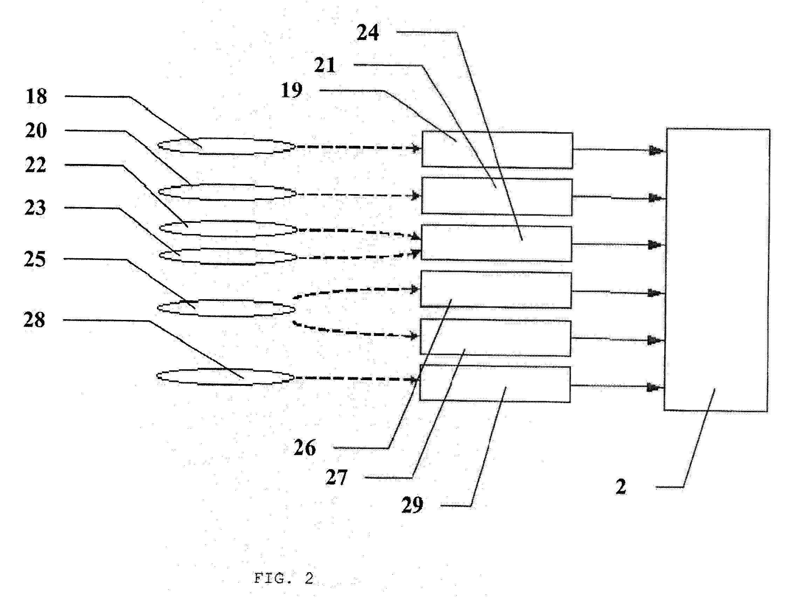

La figure 2 illustre encore les différentes sources d'information et leur utilisation. Ainsi une source de données explicite comprend les déclarations 18 de l'utilisateur, données au niveau du portail de communauté 16 et permettant de construire les données d'adhésion 19 (membership data). Les données implicites comprennent, au niveau de la plateforme de service de communauté 16, les données de connexion 20 qui permettent d'établir des données de relation 21 (relationship data) entre les utilisateurs 8 et les communautés. Au niveau de la plateforme de service de communauté 16, sont encore observées les données 22 de traces d'utilisation de l'utilisateur 8 qui permettent d'établir des données d'interaction 24 (interaction data). Au niveau de la plateforme de service de communauté, sont encore observées les données 23 de traces d'échanges entre utilisateurs 8 qui permettent de compléter les données d'interaction 24. Les données 25 issues d'un constructeur de profils 12 utilisateur permettent de construire des données d'intérêt 26 (interest data). Des profils 25 utilisateurs peuvent encore être extraites des données démographiques 27 (demographic data). Tout ceci est illustratif et l'homme du métier saura encore extraire d'autres données 29 à partir d'autres sources 28 implicites ou explicites. Toutes ces données alimentent le constructeur de profils 2 de communautés.

Une fois toutes ces informations collectées pour un ensemble d'utilisateurs 8, le gestionnaire 1 selon l'invention détecte un certain nombre de communautés et de rôles qui leurs sont associés. Le constructeur de profils 2 de communautés exploite les différentes sources de données qu'il reçoit pour détecter des communautés, en dresser le profil, afin de peupler ladite base de données 3 de communautés. Un profil de communauté contient par exemple des métriques caractérisant les communautés et leur topographie.

Une fois les communautés détectées, leur structure et leur sémantique sont codifiées au sein des profils. On entend ici par sémantique leur description/définition. L'invention produit une sémantique pour chaque communauté sous la forme d'un profil. Une communauté est ainsi caractérisée, par exemple : la communauté des admirateurs de Tom Cruise, ou des fans de films d'action et d'aventure, ou de téléphone Nokia se trouvant à Paris. Cette sémantique est représentée dans le système. Le constructeur de profils peut par exemple avoir recourt à des ontologies pour représenter les profils des communautés ou à des structures sous la forme d'arbres afin d'indiquer les contenus (feuilles, noeuds) et les relations (branches) entre eux. Les profils de communautés sont utilisés entre autres pour évaluer une distance (au sens sémantique) entre deux communautés ou entre un utilisateur et une communauté. C'est à dire savoir si l'utilisateur pourrait devenir un membre de cette communauté dans le cas où ils auraient suffisamment de points en commun. Cette distance est une métrique qui permet d'évaluer le degré d'appartenance d'un utilisateur à une communauté.

La topographie d'une communauté correspond à sa structure et ses relations par rapport aux autres communautés. Cette topographie peut être représentée sous la forme de graphes, dont les noeuds représentent des utilisateurs et les arcs les relations entre eux. Cette topographie constitue la base du profil d'une communauté.

Ainsi le profil d'une communauté comporte typiquement au moins :
- les utilisateurs (membres)
- les rôles
- les relations entre eux
- la densité des relations
- la structure des relations
- les relations intra-communautaires
- relations intercommunautaires : la position par rapport aux autres communautés (distance sémantique), mais aussi si une communauté englobe ou si une communauté est incluse totalement ou partiellement dans d'autres communautés. La distance / proximité utilisée ici est sémantique. Par exemple : deux communautés dont tous les membres sont intéressés par les films d'action et d'aventure sont proches.

En se référant à nouveau à la figure 1, le gestionnaire de communautés 1, comprend encore un analyseur topographique 5. Ce module analyse la base de données 3 de communautés pour en extraire des relations topographiques entre les communautés, telles que distances, intersections, tailles, relations hiérarchiques, etc. Ce module 5 permet ainsi de construire une topographie de l'univers des communautés couvertes par le gestionnaire de communautés 1 afin de l'organiser et de définir des relations entre les communautés pour en déduire différentes mesures.

De manière avantageuse selon un mode de réalisation de l'invention, le gestionnaire de communautés comprend encore un détecteur de rôle 7. Ce module détecte et identifie pour chaque communauté, à partir des données explicites 9 et implicites 10, 11, des rôles d'utilisateurs. Un exemple important de rôle que peut avoir un membre d'une communauté est le meneur ou « leader ». Cette personne est au coeur des échanges intercommunautaires. Il a connaissance de presque tous les membres de la communauté et de la plupart des échanges. Ce rôle est un rôle clé. Ainsi pour des applications de marketing viral, il suffit de cibler cette personne et toute la communauté sera mise au courant d'un nouveau produit ou en discutera. D'autre rôles existent comme les définisseurs de tendances ou « trendsetters », les suiveurs qui sont influençables et vont rapidement adopter les tendances, les relais intercommunautaires ou « bridges » qui permettent de relier plusieurs communautés en créant des ponts entre elles, les personnes en périphérique de la communauté, etc. Cette liste de rôles n'est bien sûr qu'illustrative et d'autres rôles peuvent être définis et être détectés par le détecteur de rôle 7. Les rôles et l'information déterminant quel utilisateur 8 tient quel rôle dans une communauté donnée sont essentiels pour les annonceurs car ils permettent un ciblage très efficace.

La base de données 3 de communautés est avantageusement mise à jour comme indiqué précédemment. De plus un historique 13 de la base de données 3 est avantageusement conservé en fonction de ses évolutions afin de pouvoir analyser les évolutions de ses contenus en fonction du temps. Le gestionnaire de communautés comprend encore un analyseur de tendances 6. Le module analyseur 6 de tendances permet de détecter et de stocker les changements/évolutions topographiques des communautés au cours du temps. Ce module 6 analyse la base de données 3 de communautés et son historique 13, pour en extraire des tendances d'évolution, pour les communautés couvertes par le gestionnaire de communautés 1. Le module 6 étudie ces évolutions et peut déduire des tendances telles que :
- croissance ou déclin de la communauté (perte ou ajout de membres et de relations)
- niveau d'activité de la communauté (fréquence des échanges intercommunautaires)
- distance (sémantique) par rapport aux autres communautés (rapprochement ou éloignement)

La liste des tendances est ici encore illustrative et peut être complétée par l'homme du métier en fonction des buts recherchés.

Le gestionnaire 1 de communautés permet avec ses modules de peupler la base de données 3 et de déterminer ainsi nombre d'informations intéressantes pour différents intervenants internes ou externes aux communautés. Afin d'exploiter ces information, le gestionnaire de communautés comprend encore une interface d'interrogation 4 permettant à un utilisateur de données ou à un autre programme, d'extraire de la base de données 3 de communautés une information. Toute information contenue dans la base de données 3 telle qu'un profil de communauté, une relation topographique, un rôle ou une tendance peut ainsi être obtenue lors de l'interrogation.

## Revendications

1. Gestionnaire de communautés (1) capable de détecter, de modéliser et de surveiller l'évolution de communautés, **caractérisé en ce qu'**il comprend une base de données (3) de communautés et un module constructeur (2) de profils de communautés, construisant des profils de communautés à partir de données explicites (9) telles que
- déclarations explicites des utilisateurs,
et implicites (10, 11) telles que
- traces d'utilisation des services de communautés,
- traces d'échanges entre utilisateurs des communautés,
- profils utilisateurs,
afin de peupler ladite base de données (3) de communautés.

2. Gestionnaire de communautés selon la revendication 1, comprenant encore un analyseur topographique (5) qui analyse la base de données (3) de communautés pour en extraire des relations topographiques entre les communautés, telles que distances, intersections, tailles, relations hiérarchiques, etc., afin de construire une topographie de l'univers des communautés couvertes par le gestionnaire de communautés (1).

3. Gestionnaire de communautés selon la revendication 1 ou 2, comprenant encore un détecteur de rôle (7) détectant et identifiant pour chaque communauté, à partir des données explicites (9) et implicites (10, 11), des rôles d'utilisateurs tel que meneur, définisseur de tendance, suiveur, relais intercommunautaire, etc.

4. Gestionnaire de communautés selon l'une des revendications 1 à 3, comprenant encore un analyseur de tendances (6) qui analyse la base de données (3) de communautés et son historique (13), pour en extraire des tendances d'évolution, pour les communautés couvertes par le gestionnaire de communautés (1).

5. Gestionnaire de communautés selon l'une des revendications 1 à 4, comprenant encore une interface d'interrogation (4) permettant d'extraire de la base de données (3) de communautés une information telle qu'un profil de communauté, une relation topographique, un rôle ou une tendance.

6. Procédé de gestion de communautés (1) capable de détecter, de modéliser et de surveiller l'évolution de communautés, **caractérisé en ce qu'**il comprend les étapes suivantes :
- construction de profils de communautés à partir de données explicites (9) telles que :
- déclarations explicites des utilisateurs,
et implicites (10, 11) telles que
- traces d'utilisation des services de communautés,
- traces d'échanges entre utilisateurs des communautés,
- profils utilisateurs,
- peuplement d'une base de données (3) de communautés.

7. Procédé de gestion de communautés selon la revendication 6, comprenant encore une étape d'analyse la base de données (3) de communautés pour en extraire des relations topographiques entre les communautés, telles que distances, intersections, tailles, relations hiérarchiques, etc., afin de construire une topographie de l'univers des communautés.

8. Procédé de gestion de communautés selon la revendication 6 ou 7, comprenant encore une étape détectant et identifiant pour chaque communauté, à partir des données explicites (9) et implicites (10, 11), des rôles d'utilisateurs tel que meneur, définisseur de tendance, suiveur, relais intercommunautaire, etc.

9. Procédé de gestion de communautés selon l'une des revendications 6 à 8, comprenant encore une étape d'analyse de la base de données (3) de communautés et son historique (13), pour en extraire des tendances d'évolution, pour les communautés.

10. Procédé de gestion de communautés selon l'une des revendications 6 à 9, comprenant encore une étape d'extraction de la base de données (3) de communautés d'une information telle qu'un profil de communauté, une relation topographique, un rôle ou une tendance.

11. Programme d'ordinateur implémentant le procédé de gestion de communautés selon l'une quelconque des revendication 6 à 10.
